# EUROPÄISCHE PATENTSCHRIFT

(11) **EP 1 656 270 B1**
(45) Veröffentlichungstag und Bekanntmachung des Hinweises auf die Patenterteilung: **31.01.2007**
(21) Anmeldenummer: 04764089.1
(22) Anmeldetag: 13.08.2004
(51) Int. Cl.: B60H 1/00

(54) **VERFAHREN ZUM BETREIBEN EINER KLIMAANLAGE UND KLIMAANLAGE FÜR EIN VERKEHRSMITTEL**
METHOD FOR OPERATING AN AIR CONDITIONER, AND AIR CONDITIONER FOR A MEANS OF TRANSPORT
PROCEDE PERMETTANT DE FAIRE FONCTIONNER UNE INSTALLATION DE CLIMATISATION ET INSTALLATION DE CLIMATISATION D'UN MOYEN DE TRANSPORT

(30) Priorität: 23.08.2003 DE 10338790
(43) Veröffentlichungstag der Anmeldung: 17.05.2006
(73) Patentinhaber: Bayerische Motoren Werke Aktiengesellschaft, 80809 München (DE)
(72) Erfinder: JURTHE, Stefan, 83607 Holzkirchen (DE)
(86) Internationale Anmeldenummer: PCT/EP2004/009094
(87) Internationale Veröffentlichungsnummer: WO 2005/021299

(56) Entgegenhaltungen:
- EP-A- 1 024 040
- EP-A- 1 262 346
- DE-A- 4 426 732
- DE-A- 10 252 358
- US-A1- 2003 051 491

## Beschreibung

Die Erfindung betrifft ein Verfahren zum Betreiben einer Klimaanlage für ein Verkehrsmittel sowie eine Klimaanlage für ein Verkehrsmittel, insbesondere für ein Kraftfahrzeug.

Bei heutigen Klimaanlagen in Kraftfahrzeugen ergibt sich eine automatische Einstellung eines als Stellglied wirkenden Klimaanlagenbestandteils, wie dem Gebläse oder den Luftverteilungsklappen, aus der Kombination (beispielsweise in Form einer Addition) von Teileinstellungen, welche aus bestimmten Betriebszuständen abgeleitet werden. Unter Betriebszuständen im Sinne der Erfindung werden neben Umgebungsbedingungen wie Sonneneinstrahlung, Temperatur (innen, außen), Luftfeuchte (innen, außen) oder Helligkeit auch abstrakte Kenngrößen wie zum Beispiel die anhand von Modellen berechnete im Fahrzeug enthaltene Wärmemenge verstanden.

Die Automatikkennlinien bekannter Klimaanlagen werden durch Experten ermittelt und abgestimmt, mit dem Ziel den größtmöglichen Teil der Benutzer zufrieden zu stellen. Bei der Ermittlung der Automatikkennlinen ist neben dem subjektiven Klimawohlbefinden auch die Akustik (z.B. durch Gebläse) sowie die Geschwindigkeit in der eine Aufheizung bzw. Abkühlung automatisch geregelt wird von Bedeutung. Diese durch Experten-Kennlinien realisierte sogenannte Achtzig-Prozent-Abstimmung ist nicht in allen Betriebszuständen für jeden Benutzer optimal. Durch manuellen Eingriff kann der Benutzer die automatische Einstellung im manuellen Betrieb individuell anpassen. Dabei deaktiviert der Benutzer automatisch die Automatik. Sollten sich Betriebszustände (z.B. durch Wetteränderung oder aufgrund der Fahrzeit nach Start mit kaltem Fahrzeug) ändern, kann diese manuell vorgenommene individuelle Einstellung sehr falsch sein, so dass der Benutzer wiederum mit der Automatikeinstellung zufriedener wäre. Die dann gewählte Automatikeinstellung hat jedoch ebenfalls wiederum, das zuvor beschriebene Problem nicht individuell auf das Behaglichkeitsempfinden des Benutzers abgestimmt zu sein (Achtzig-Prozent-Abstimmung). Der Benutzer müsste demnach erneut durch manuelle Einstellung entsprechende Anpassungen vornehmen.

Die DE 44 26 732 A1 beschreibt eine Klimaanlage mit Sensoren zur Erfassung von klimabeeinflussenden oder -repräsentierenden Parameterwerten, Speichermitteln zur Hinterlegung von Automatikkennlinien, die die festen Abhängigkeiten zwischen den erfassten Sensorsignalen und diesen zugeordneten Stellgrößen für Bestandteile der Klimaanlage im Automatikbetrieb beschreiben sowie mit Einrichtungen zur manuellen Einstellung und Speicherung der Stellgrößen. Bei dieser Klimaanlage kann durch die manuelle Einstellung und Speicherung der Stellgrößen sowie der durch die Umgebungsparameter definierten Umgebungsbedingungen ein Individualbetrieb nach den Wünschen des Benutzers eingestellt werden. Dieser Individualbetrieb kann den fest vorgegebenen Automatikbetrieb bei Bedarf überlagern und bei Vorliegen entsprechender Umgebungsbedingungen automatisch eingeleitet und durch manuelle Veränderungen des Benutzers oder Umschaltung auf den festen Automatikbetrieb abgeschaltet werden.

In der DE 102 52 358 A1 ist eine Fahrzeugklimaanlage zum automatischen Steuern einer in eine Fahrzeugzelle zu blasenden Luftblasmenge beschrieben, bei der die Automatikkennlinie der Luftblasmenge basierend auf einer manuellen Betätigung korrigiert wird. Hierbei wird die zu korrigierende Automatikkennlinie bei jedem manuellen Eingriff derart korrigiert, das ein Teil der Kennlinie durch Bestimmen eines neuen linearisierten Geradenabschnittes der Kennlinie verändert wird. Hierdurch können die Wünsche des Benutzers allerdings nur eingeschränkt genau berücksichtigt werden.

Der Erfindung liegt die Aufgabe zugrunde, eine alternative Klimaanlage sowie ein Verfahren zur Steuerung einer Klimaanlage zu schaffen, wodurch individuelle Benutzerbedürfnisse besser berücksichtigt werden können.

Erfindungsgemäß wird die Aufgabe jeweils durch die Gesamtheit der Merkmale der unabhängigen Ansprüche gelöst. Gemäß der Erfindung wird bei einer Klimaanlage bzw. bei einem Verfahren zum Betreiben einer Klimaanlage während deren Betrieb - vorzugsweise während des Automatikbetriebs - jeder manuelle Einstellvorgang des Benutzers registriert und in Abhängigkeit dieser Änderung (Abweichung der manuell eingestellten Stellgrößen von den zugeordneten zum Zeitpunkt der Änderung - das heißt bei gleichen Betriebszustandswerten - vorliegenden Stellgrößen des Automatikbetriebs) ein Anlernwert ermittelt, durch welchen mindestens eine ausgewählte Automatikkennlinie abgeändert (korrigiert) wird. Der Anlernwert wird ermittelt indem eine Bewertung der Abweichung der Stellgröße zwischen einer aufgrund des manuellen Einstellvorgangs erzeugten Stellgröße und der jeweils zugeordneten Stellgröße des Automatikbetriebs bei gleichen Betriebszustandswerten erfolgt und jeder Anlernwert mit Hilfe einer Wichtungsfunktion über einen Bereich mehrerer Stützstellen gewichtet wird und die zu korrigierende Automatikkennlinie an jeder der Stützstellen mit dem der jeweiligen Stützstelle zuzuordnenden Teil des gewichteten Anlernwertes korrigiert wird. Vorzugsweise ist die Wichtungsfunktion in der Art einer Normalfunktion ausgebildet derart, dass an den jeweils aktiven Stützstellen am stärksten und an den weiter entfernten Stützstellen gemäß der Verteilungsfunktion immer weniger oder gar nicht mehr angelernt wird. Andere Formen einer Kennlinie, wie etwa eine Dreieckfunktion mit ansteigender und abfallender Flanke und einem dazwischenliegenden Maximalwert sind ebenfalls denkbar.

Vorzugsweise erfolgt die Abänderung der Automatikkennlinie erst nach mehrmaliger manueller Änderung während des Betriebs der Klimaanlage bei zumindest nahezu gleichen Betriebszustandswerten (wie Lufttemperatur (innen; außen), Luftfeuchte (innen; außen), Sonnenlichtmenge, usw.). Hierdurch werden über eine längere Betriebszeit der Klimaanlage, gegebenenfalls auch erst über mehrere Fahrten mit aktivierter Klimaanlage, eine Mehrzahl von Stellgrößenpaaren bestehend aus der jeweils manuell eingestellten Stellgröße und der den gleichen Betriebszustandswerten zugeordneten Stellgrößen für den Automatikbetrieb der Klimaanlage ermittelt und jeweils auf einen Mittelwert gemittelt.

Um in möglichst kurzer Zeit möglichst viele geänderte Stellgrößen zu erhalten, können diese sowohl während des Automatikbetriebs als auch während des manuellen Betriebs der Klimaanlage erfasst und für eine Änderung der Automatikkennlinie(n) herangezogen werden. Aufgrund dieser Erfahrungswerte (der Erfassung und Mittelung der Stellgrößen) über eine längere Betriebsdauer der Klimaanlage wird ein zu überhastetes Anlernen mit großen Schwankungen während des Betriebs der Klimaautomatik vermieden.

In einer weiteren bevorzugten Ausführungsform der Erfindung werden mehrere Kennlinien für unterschiedliche Betriebszustände (wie z.B. Sonnenlichtmenge, Luftfeuchte, Lufttemperatur, oder dergleichen) korrigiert. Hierfür werden die zu korrigierenden Automatikkennlinien aus einer Mehrzahl von hinterlegten und je nach vorliegenden Betriebszuständen unterschiedlich in ihrer Priorität auf einer Art Rangliste der hinterlegten Automatikkennlinien in der Reihenfolge der Rangliste ausgewählt. In einer Weiterbildung der Erfindung wird, für den Fall, dass mehrere Automatikkennlinien zur Korrektur ausgewählt wurden, der ermittelte Anlernwert gemäß einem Aufteilungsgesetz - insbesondere in Form einer Kennlinie abgebildet - auf die Anzahl der ausgewählten Kennlinien aufgeteilt.

Um die Kontinuität jeder zu korrigierenden Automatikkennlinie beizubehalten, erfolgt das Anlernen bzw. die Korrektur vorzugsweise an allen Stützstellen der jeweiligen Kennlinie.

In einer besonders bevorzugten Ausführung erfolgt der Übergang von dem aufgrund des manuellen Eingriffs vorliegenden manuellen Betrieb der Klimaanlage in den automatischen Betrieb der Klimaanlage kontinuierlich. Hierfür wird beispielsweise nach Abschluss des manuellen Eingriffs ein Verzögerungsglied in Form eines Zählers oder dergleichen gestartet, so dass zu Zählbeginn ein vollständiger manueller Betrieb vorliegt und dieser kontinuierlich mit dem Zählvorgang des Zählers über einen zwischenzeitlichen sich ändernden Mischbetrieb in den vollständigen Automatikbetrieb übergeht. Vorzugsweise ist das Verzögerungsglied zur Realisierung des kontinuierlichen Übergangs derart ausgebildet, dass bei manueller Aktivierung der Automatikfunktion jederzeit der kontinuierliche Übergang abgebrochen und sofort in den vollständigen Automatikbetrieb übergegangen werden kann.

Neben dem erfindungsgemäßen Verfahren zum Betreiben einer Klimaanlage umfasst die Erfindung auch eine Klimaanlage als solche. Diese erfindungsgemäße Klimaanlage ist sowohl in einem manuellen Betrieb als auch in einem automatischen Betrieb betreibbar, wobei im automatischen Betrieb jede Automatikkennlinie basierend auf einem manuellen Einstellvorgang korrigierbar ist. Die Klimaanlage umfasst Sensoren zur Erfassung von das Klima im Verkehrsmittel beeinflussenden und einen Betriebszustand repräsentierenden Betriebszustandswerten (innerhalb und außerhalb des Fahrzeugs) sowie Aktuatoren wie Gebläse oder Luftklappenantrieb. Ferner sind Speichermittel vorgesehen, die eine Mehrzahl von Automatikkennlinien für unterschiedliche Betriebszustände bereithalten welche die fest vorgegebenen Abhängigkeiten zwischen den erfassten Betriebszustandswerten und den zugeordneten Stellgrößen für Aktuatoren der Klimaanlage während des Betriebs repräsentieren. Schließlich sind Einstellmittel zur Vornahme von manuellen Einstellvorgängen (z.B. Einstellen der Gebläsestärke oder Einstellen der Einströmrichtung und der Menge, der in das Fahrzeuginnere eingeblasenen Luft) vorgesehen. Erfindungsgemäß umfasst die Klimaanlage weiter Mittel zur Erfassung eines manuellen Einstellvorgangs während des Klimaanlagenbetriebs, Mittel zur Auswahl einer zu korrigierenden Automatikkennlinie für einen bestimmten Betriebszustand, Mittel zur Ermittlung der Stellgrößenabweichung zwischen der aufgrund des manuellen Einstellvorgangs eingestellten Stellgröße und der zu diesem Zeitpunkt vorliegenden Betriebszustandswerten zugeordneten Stellgröße für den Automatikbetrieb, Mittel zur Ermittlung eines Anlernwertes durch Bewertung der ermittelten Stellgrößenabweichung mit einem Bewertungsfaktor kleiner eins sowie Mittel zur Wichtung des Anlernwertes über einen Bereich mehrerer Stützstellen der Automatikkennlinie und Mittel zur Anpassung der Automatikkennlinie in Abhängigkeit von dem ermittelten Anlernwert. Vorzugsweise sind alle vorstehend genannten Mittel durch das Klimasteuergerät realisiert. In den Unteransprüchen 9-13 finden sich weitere vorteilhafte Ausgestaltungen der Klimaanlage.

Im Folgenden wird die Erfindung anhand von Figuren näher erläutert. Es zeigen:
- Figur 1:: die schematische Darstellung einer möglichen Ausführung einer Logik für den Betrieb einer Klimaanlage,
- Figur 2:: eine mögliche Ausführung für eine Verknüpfungslogik für die Ermittlung eines Anlernwertes,
- Figur 3:: eine mögliche Ausführung einer Verknüpfungslogik für die Aufteilung des Anlernwertes auf zwei zu korrigierende Automatikkennlinien,
- Figur 4:: eine mögliche Ausführung für eine Verknüpfungslogik zur Wichtung von Anlernwerten zur Verteilung auf mehrere Stützstellen der zu korrigierenden Automatikkennlinie und
- Figur 5:: eine mögliche Ausführungsform eines Verzögerungsgliedes für den kontinuierlichen Übergang aus dem aufgrund eines manuellen Eingriffs vorliegenden manuellen Betriebs in den Automatikbetrieb.

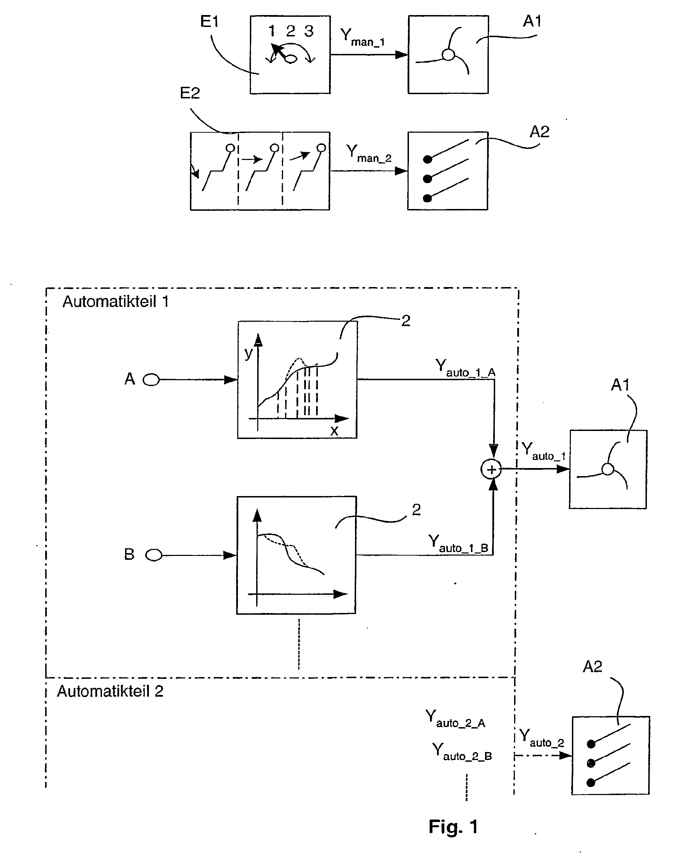

Der obere Teil der Figur 1 zeigt in schematisch vereinfachter Darstellung den manuellen Teil einer Klimaanlage. Als manuelle Einstellmittel E1, E2 sind beispielhaft erste Einstellmittel E1 zur Vorgabe der Gebläsestärke sowie zweite Einstellmittel E2 zur Vorgabe der Luftmenge und der Richtung in der die Luft ins Fahrzeug einströmen soll vorhanden. Dabei werden über die Einstellmittel E1, E2 manuelle Stellgrößen Y_{man_1}, Y_{man_2} eingestellt anhand derer die Aktuatoren A1, A2 der Klimaanlage - wie Gebläse, oder Luftklappenantrieb - angesteuert werden. Gemäß der Erfindung wirken erfasste Änderungen einer Stellgröße Y_{man_1}, Y_{man_2} aufgrund eines manuellen Einstellvorgangs auf den automatischen Teil der Klimaanlage derart, dass die vorgenommenen Änderungen sowie die im Zeitpunkt der vorgenommenen Änderungen vorliegenden Betriebszustandswerte X erfasst und aufgrund dieser Änderungen die hinterlegte Kennlinie oder die hinterlegten Kennlinien abgeändert werden und nur die abgeänderte Automatikkennlinie(n) im weiteren Automatikbetrieb für die Regelung herangezogen wird (werden).

Figur 1 zeigt im unteren Teil schematisch vereinfacht den automatisierten Teil einer Klimaanlage mit Automatikkennlinien 2 für unterschiedliche Betriebszustände A, B. Dabei ist in einem Automatikteil 1 der Einfluss verschiedener Betriebszustände A, B auf eine einzige Stellgröße eines Aktuators A1 - hier eines Gebläses - veranschaulicht. Jedes Kennlinienfeld beinhaltet hier jeweils eine Kennlinie für genau einen Betriebszustand A, B. Beispielsweise repräsentiert die obere Automatikkennlinie 2 den Zusammenhang zwischen erfassten Betriebszustandswerten aufgrund von Sonneneinstrahlung (x-Achse) und der jeweils zugeordneten Stellgröße Y_{auto_1_A} für die Gebläseleistung (y-Achse), während die untere Automatikkennlinie 2 z.B. den Zusammenhang zwischen erfassten Betriebszustandswerten aufgrund der Luftfeuchte im Fahrzeuginnenraum (x-Achse) und der jeweils zugeordneten Stellgröße Y_{auto_1_B} für die Gebläseleistung (y-Achse) wiedergibt. Da hier mehrere Betriebszustände A, B die Ansteuerung des Gebläses Beeinflussen sollen, werden die erzeugten Stellgrößen Y_{auto_1_A}, Y_{auto_1_B} zu einer resultierenden Stellgröße Y_{auto_1} zusammengeführt. Für den Fall, dass lediglich ein einziger Betriebszustand A, B die Ansteuerung des Aktuators A1 beeinflussen soll, würde die einzige erzeugte Stellgröße Y_{auto_1_A} gleichzeitig die resultierende Stellgröße Y_{auto_1} zur unmittelbaren Ansteuerung des Aktuators A1 darstellen. Durch die gestrichelte Linie soll angedeutet werden, dass eine Vielzahl weiterer Automatikkennlinien 2 für weitere Betriebszustände (wie Lufttemperatur (außen, innen), Luftfeuchte (außen), ...) vorhanden sein können.

Im Automatikteil 2 ist die Steuerung eines Aktuators A2 in Form eines Luftklappenantriebs gezeigt. Analog zum Automatikteil 1 wird hier die Ansteuerung des Luftklappenantriebs durch mindestens ein, vorzugsweise eine Mehrzahl von einzelnen Kennlinienfeldern angedeutet. Die Stellgröße Y_{auto_2} kann ebenfalls aus mehreren Stellgrößen Y_{auto_2_A}, Y_{auto_2_B} unterschiedlicher Kennlinienfelder unterschiedlicher Betriebszustände gebildet oder direkt durch die einzelne Stellgröße Y_{auto_2_A} eines einzigen Kennlinienfeldes gebildet sein.

Die senkrechten gestrichelten Linien zwischen X-Achse und Kennlinie im Automatikteil 1 sollen veranschaulichen, dass jede Kennlinie eine Vielzahl von sogenannten Stützstellen aufweist. Die Werte zwischen den Stützstellen ergeben sich insbesondere durch lineare Interpolation. Um ein möglichst stetiges Anlernverhalten zu erhalten sind die Abstände zwischen den benachbarten Stützstellen möglichst klein zu wählen. Die kleingestrichelten Kennlinienteile einer Automatikkennlinie 2 veranschaulichen die jeweils mittels dem erfindungsgemäßen Verfahren bzw. der erfindungsgemäßen Klimaanlage korrigierten Teilbereiche der korrigierten Automatikkennlinie 2. Die korrigierten Teilbereiche zusammen mit den endseitig weiterverlaufenden Teilbereichen der ursprünglichen Automatikkennlinie 2 ergeben die gesamte korrigierte Automatikkennlinie 2, die nach einer erfolgten Korrektur - zumindest bis zum nächsten Anlernvorgang aufgrund manueller Eingriffe während des Automatikbetriebs - als Grundlage für weitere Regelvorgänge dient.

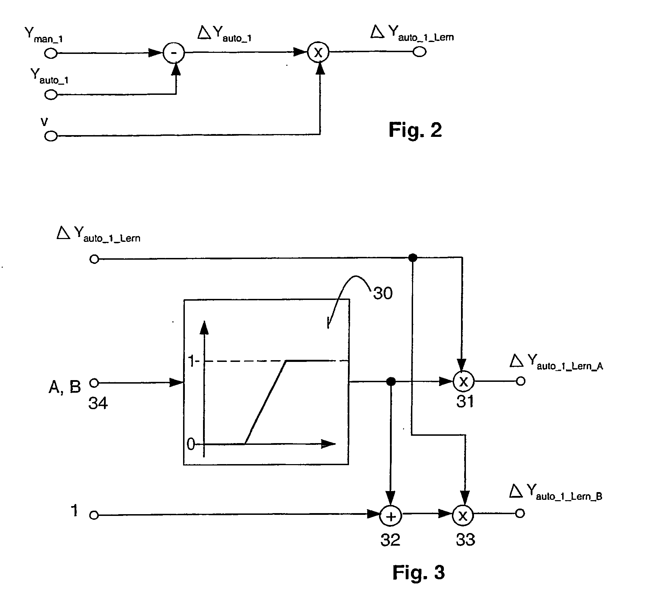

In der Figur 2 ist eine mögliche Ausführung einer Verknüpfungslogik für die Ermittlung eines Anlernwertes ΔY_{auto_1_Lern} dargestellt. Gemäß der Erfindung wird vorzugsweise während des gesamten Betriebs der Klimaanlage überwacht, ob ein manueller Eingriff erfolgt. Ist ein derartiger Eingriff erfolgt, wird - vorzugsweise erst nach Ablauf einer vorgegebenen Entprellzeit - die aufgrund des manuellen Eingriffs vorliegende Stellgröße Y_{man_1} für die Ansteuerung eines Stellgliedes mit der zum Zeitpunkt des Eingriffs vorliegenden Stellgröße Y_{auto_1} des Automatikbetriebs verglichen (z.B. durch Subtraktion). Die so ermittelte Abweichung ΔY_{auto_1} wird erfindungsgemäß mit einem Bewertungsfaktor v (insbesondere Faktor < 1) multipliziert und so ein Anlernwert ΔY_{auto_1_Lern} zur Korrektur einer oder mehrerer Automatikkennlinie(n) 2 ermittelt. Mit Hilfe des Anlernwertes ΔY_{auto_1_Lern} wird die derzeit aktuelle Automatikkennlinie 2 angepasst und ersetzt.

Da je nach Gesamtbetriebszustand (alle auftretenden und erfassten Betriebszustände bzw. Parameter) mehrere Automatikkennlinien 2 gleichzeitig aktiv sein können, ermittelt eine spezielle Logik, mit welchem Teilbetrag des ermittelten Anlernwertes ΔY_{auto_1_Lern} jede der Automatikkennlinien 2 für einen bestimmten Betriebszustand A, B angelernt bzw. korrigiert werden soll. Eine derartige Logik ist beispielhaft für zwei gleichzeitig aktive Automatikkennlinien 2 in Figur 3 dargestellt. Dieser Logik wird ein signifikanter Betriebszustand (z.B. Außentemperatur) mitgeteilt und mittels eines Aufteilungsgesetzes, welches z.B. in Form einer Kennlinie vorhanden ist, ein Anteil des Anlernwertes ΔY_{auto_1_Lern_A}, ΔY_{auto_1_Lern_B} ermittelt, der für das Anlernen der ausgewählten Automatikkennlinie 2 verwendet werden soll. Dabei kann der signifikante Betriebszustand A, B auch einer sein, dessen Kennlinie gerade nicht verändert wird. Der verbleibende Rest des Anlernwertes kann für die Korrektur der übrigen Automatikkennlinien 2 verwendet werden. Die Logik besteht im dargestellten Beispiel aus einem Kennlinienteil 30 (Abbildung eines Aufteilungsgesetzes, z.B. in Form einer Rampenfunktion) und drei Verknüpfungsstellen 31, 32, 33. Dabei wird dem Kennlinienteil 30 über einen ersten Logikeingang 34 ein signifikanter Betriebszustand A, B mitgeteilt. Anhand des Kennlinienteils 30 wird ein Anteilsfaktor zwischen Null und Eins ermittelt, welcher über die erste Verknüpfungsstelle 31 multipliziert mit dem Anlernwert ΔY_{auto_1_Lern} den Anlernwertanteil ΔY_{auto_1_Lern_A} für die erste Automatikkennlinie 2 der Prioritätenliste ergibt. Gleichzeitig wird der Anteilsfaktor über die zweite Verknüpfungsstelle 32 vom Wert Eins subtrahiert und dieses Ergebnis mit dem Anlernwert ΔY_{auto_1_Lern} über die dritte Verknüpfungsstelle 33 multipliziert und ein Anlernwertanteil ΔY_{auto_1_Lern_B} für die zweite Automatikkennlinie 2 der Prioritätenliste erhalten. Es können beliebig viele weitere Anlernwertanteile für zu korrigierende Automatikkennlinien 2 ermittelt werden. Hierfür wären dann allerdings weitere entsprechende Aufteilungsgesetze repräsentierende Kennlinienteile 30 in die Logik einzubinden. Die gleichzeitig aktiven und zu korrigierenden Automatikkennlinien 2 für die einzelnen Betriebszustände A, B sind in Abhängigkeit vom jeweils vorliegenden Gesamtbetriebszustand in einer Art Prioritätenliste in bestimmter Reihenfolge hinterlegt. Die Prioritätenliste ist vorzugsweise unveränderbar herstellerseitig vorgegeben.

Eine Automatikkennlinie 2 hat, wie in Figur 1 bereits angedeutet, eine Vielzahl von Stützstellen. Sie wird im allgemeinen durch lineare Interpolation zwischen den zwei dem jeweiligen Eingangswert nächstliegenden Stützstellen ermittelt. Um die Kontinuität der zu korrigierenden Automatikkennlinie 2 beizubehalten, erfolgt das Anlernen vorzugsweise an allen Stützstellen der Automatikkennlinie 2. Erfindungsgemäß erfolgt das Anlernen durch eine gewichtete Addition des ermittelten Anlernwertes ΔY_{auto_1_Lern} bzw. Anlernwertanteils ΔY_{auto_1_Lern_A}, ΔY_{auto_1_Lern_B} mit dem ursprünglichen Wert der Stellgröße Y_{auto_1}, Y_{auto_1_A}, Y_{auto_1_B} für den Automatikbetrieb. Die Wichtung wird so gewählt, dass an den jeweils aktiven Stützstellen am stärksten angelernt wird und das Anlernen mit Entfernung von einer aktiven Stützstelle abnimmt. Grundlage einer derartigen Wichtung kann beispielsweise eine normierte (Maximalwert der Verteilung = 1) Normalfunktion (wie Gaußsche Normalverteilung) sein. Dabei ist die Normalverteilungskurve so einzubinden, dass deren Scheitelpunkt (Mittelwert=1 ) dem aktuellen Betriebszustandswert Xₐₖₜᵤₑₗₗ zugeordnet ist und die Standardabweichung σ die gewünschte Anlernbreite definiert.

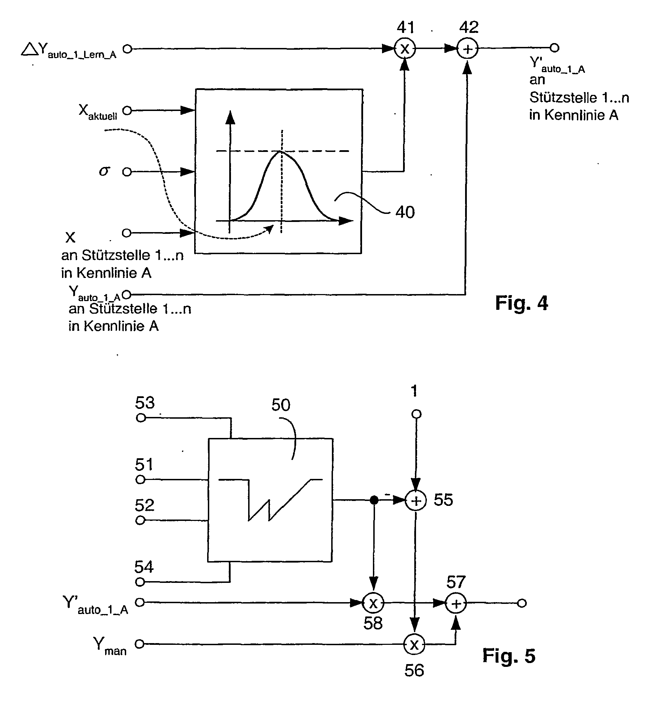

Eine mögliche Ausführung für eine Verknüpfungslogik zur Wichtung von Anlernwerten ΔY_{auto_1_Lern} bzw. Anlernwertanteilen ΔY_{auto_1_Lern_A} und damit zur Verteilung auf mehrere Stützstellen der zu korrigierenden Automatikkennlinie 2 ist in Figur 4 dargestellt. Diese Logik umfasst hier einen Anlernteil 40 mit der hinterlegten Kennlinie einer Normalverteilung sowie zwei Verknüpfungsstellen 41, 42. Dabei werden dem Anlernteil 40 eingangsseitig der aktuelle Betriebszustandswert Xₐₖₜᵤₑₗₗ, die gewünschte Anlernbreite σ sowie der Betriebszustandswert X an der jeweils aktiven Stützstelle zugeführt. Jeder Stützstelle wird anhand der Kennlinie des Anlernteils 40 ein Anlernfaktor zugeordnet. Durch Multiplikation des zuvor ermittelten Anlernwertanteils ΔY_{auto_1_Lern_A} bzw. des Anlernwerts ΔY_{auto_1_Lern} mit dem Anlernfaktor in der ersten Verknüpfungsstelle 41 und der anschließenden Addition mit der ursprünglichen Stellgröße Y_{auto_1_A} an der aktiven Stützstelle in der zweiten Verknüpfungsstelle 42 wird die neue korrigierte Stellgröße Y'_{auto_1_A} für die entsprechende Stützstelle berechnet.

Um das Komfortverhalten der erfindungsgemäßen Klimaanlage zu verbessern, wird nach einem aufgrund eines manuellen Eingriffs in den Automatikbetrieb vorliegenden manuellen Betriebs der automatische Übergang zurück in den Automatikbetrieb kontinuierlich durchgeführt. Hierfür findet vorzugsweise ein Verzögerungsglied gemäß Figur 5 in Form eines Zählers 50 Verwendung. Der Zähler 50 weist eingangsseitig Eingänge 51, 52 für die Vorgabe von Ober- und Untergrenzen sowie einen Eingang 53 für den Start und einen Eingang 54 für die manuelle Sofortumschaltung in den Automatikbetrieb auf. Weiterhin umfasst das Verzögerungsglied vier Verknüpfungsstellen 55, 56, 57, 58. Der Zähler 50 wird für den kontinuierlichen Übergang in den Automatikbetrieb nach Beendigung des manuellen Einstellvorgangs gestartet. Dies geschieht beispielsweise durch die Erzeugung eines Startsignals nach einer vordefinierten Verweilzeit im Anschluss an einen manuellen Eingriff. Sollte während des Zählvorganges ein erneuter Eingriff erfolgen wird der Zähler wieder zurückgesetzt und nach Ablauf der Verweilzeit erneut gestartet. Auf diese Weise wird ein gleitender Übergang (mit Mischbetrieb) von einem Startwert des Zählers (vollständig manueller Betrieb) bis zu einem Endwert des Zählers (vollständig Automatikbetrieb) erreicht. Während der Zählerlaufzeit wird somit eine Kombination aus Automatikbetrieb und manuellem Betrieb realisiert, wobei die jeweilige Einstellung durch eine Kombination der korrigierten Stellgröße Y'_{auto_1} für dem Automatikbetrieb Y'_{auto_1} und der Stellgröße Y_{man_1} aufgrund der manuellen Einstellung erfolgt. Im vorliegenden Beispiel zählt der Zähler 50 nach seinem Start von 0 auf 1 hoch. Mit jedem manuellen Eingriff während dieser Zähldauer wird er zurückgesetzt und wird erneut gestartet. Während dieser Zähldauer werden die Zählerwerte dauernd erfasst und am Zählerausgang bereitgestellt. Diese Zählerwerte werden laufend verarbeitet indem der jeweils aktuelle Zählerwert mit der Stellgröße Y'_{auto_1} für die automatische Einstellung in der Verknüpfungsstelle 58 multipliziert und dieses Ergebnis an die Verknüpfungsstelle 57 weitergeleitet wird, wo es sodann mit dem Produkt (Verknüpfungsstelle 56) aus der Stellgröße Y_{man_1} der manuellen Einstellung und dem Ergebnis der Subtraktion von 1 - aktueller Zählerwert zur momentanen Stellgröße addiert wird (Verknüpfungsstelle 57).

## Patentansprüche

1. Verfahren zum Betreiben einer sowohl manuell als auch automatisch betreibbaren Klimaanlage für ein Verkehrsmittel, insbesondere ein Kraftfahrzeug, wobei eine Automatikkennlinie (2) basierend auf einem manuellen Einstellvorgang korrigiert wird
und wobei die Klimaanlage umfasst:
- Sensoren zur Erfassung von das Klima im Verkehrsmittel beeinflussenden und einen Betriebszustand (A, B) repräsentierenden Betriebszustandswerten (X),
- Aktuatoren (A1, A2) in Form von Klimaanlagenbestandteilen wie Gebläse oder Luftklappenantrieb,
- Speichermittel mit einer Mehrzahl von Automatikkennlinien (2) für unterschiedliche Betriebszustände (A, B), die die fest vorgegebenen Abhängigkeiten zwischen den erfassten Betriebszustandswerten (X) und den diesen zugeordneten Stellgrößenanteilen (Y_{auto_1}; Y_{auto_1_A}, Y_{auto_1_B}; Y_{auto_2}; Y_{auto_2_A}, Y_{auto_2_B}) für Aktuatoren (A1; A2) der Klimaanlage während des Automatikbetriebs repräsentieren sowie
- Einstellmittel (E1, E2) zur Vornahme des manuellen Einstellvorgangs und der Vorgabe von Stellgrößen (Y_{man_1}, Y_{man_2}) für die Aktuatoren (A1, A2) der Klimaanlage,
mit folgenden Verfahrensschritten:
a) Erfassung des Vorliegens eines manuellen Einstellvorgangs,
b) Ermittlung der Stellgrößenabweichung (ΔY_{auto_1}, ΔY_{auto_2}) zwischen der aufgrund des manuellen Einstellvorgangs eingestellten Stellgröße (Y_{man_1}, Y_{man_2}) und der bei gleichem Betriebszustandswert (X) dem Automatikbetrieb zugeordneter Stellgröße (Y_{auto_1}, Y_{auto_2}),
c) Ermittlung eines Anlernwertes (ΔY_{auto_1_Lern}, ΔY_{auto_2_Lern}) durch Bewertung der ermittelten Stellgrößenabweichung (ΔY_{auto_1}, ΔY_{auto_2}) mit einem Bewertungsfaktor (v),
d) Anpassung der Automatikkennlinie (2) in Abhängigkeit von dem unter c) ermittelten Anlernwert (ΔY_{auto_1_Lern}, ΔY_{auto_2_Lern}), indem jeder Anlernwert (ΔY_{auto_1_Lern}, ΔY_{auto_2_Lern}) mit Hilfe einer Wichtungsfunktion über einen Bereich mehrerer Stützstellen gewichtet wird und die zu korrigierende Automatikkennlinie (2) an jeder der Stützstellen in Abhängigkeit von dem gewichteten Anlernwert korrigiert wird.

2. Verfahren nach vorstehendem Anspruch, **dadurch gekennzeichnet, dass** einem Aktuator (A1; A2) zumindest zwei Automatikkennlinien (2) unterschiedlicher Betriebszustände (A, B) zugeordnet sind der zugehörige Anlernwert (ΔY_{auto_1_Lern}, ΔY_{auto_2_Lern}) mittels eines Aufteilungsgesetzes, insbesondere in Form einer Kennlinie, auf mehrere Automatikkennlinien (2) aufgeteilt wird.

3. Verfahren nach einem der vorstehenden Ansprüche, **dadurch gekennzeichnet, dass** die Wichtungsfunktion eine Normalverteilungsfunktion ist.

4. Verfahren nach einem der vorstehenden Ansprüche, **dadurch gekennzeichnet, dass** der Scheitelpunkt der Wichtungsfunktion im aktuellen Betriebszustandswert (Xₐₖₜᵤₑₗₗ) der zu korrigierenden Automatikkennlinie (2) angeordnet ist.

5. Verfahren nach einem der vorstehenden Ansprüche, **dadurch gekennzeichnet, dass** der aufgrund des manuellen Einstellvorgangs vorliegende manuelle Betrieb nach Beendigung des Einstellvorgangs automatisch und kontinuierlich in den Automatikbetrieb überführt wird.

6. Verfahren nach einem der vorstehendem Ansprüche, **dadurch gekennzeichnet, dass** jede zu korrigierende Automatikkennlinie (2) aus einer Mehrzahl von Automatikkennlinien (2) ausgewählt wird, wobei diese in Abhängigkeit von den vorliegenden Betriebszuständen (A, B) unterschiedlich priorisiert sind und die Auswahl jeder Automatikkennlinie (2) in der Reihenfolge der Priorisierung erfolgt.

7. Verfahren nach einem der vorstehenden Ansprüche, **dadurch gekennzeichnet, dass** die Abweichung über eine aus einer Vielzahl von Einzelwerten manuell eingestellter Stellgrößen (Y_{man_1}, Y_{man_2}) bei jeweils zumindest nahezu gleichen Betriebszustandswerten (X) und diesen zugeordneten Stellgrößen (Y_{auto_1}, Y_{auto_2}) für den Automatikbetrieb ermittelt wird.

8. Klimaanlage für ein Verkehrsmittel, insbesondere ein Kraftfahrzeug, mit einem manuellen Betrieb und einem automatischen Betrieb, wobei im automatischen Betrieb jede Automatikkennlinie (2) basierend auf einem manuellen Einstellvorgang korrigierbar ist, umfassend:
- Sensoren zur Erfassung von das Klima im Verkehrsmittel beeinflussenden und einen Betriebszustand (A, B) repräsentierenden Betriebszustandswerten (X),
- Aktuatoren (A1, A2) in Form von Klimaanlagenbestandteilen wie Gebläse oder Luftklappenantrieb,
- Speichermittel mit einer Mehrzahl von Automatikkennlinien (2) für unterschiedliche Betriebszustände (A, B), die die fest vorgegebenen Abhängigkeiten zwischen den erfassten Betriebszustandswerten (X) und den diesen zugeordneten Stellgrößen (Y_{auto_1}; Y_{auto_1_A}, Y_{auto_1_B}; Y_{auto_2}; Y_{auto_2_A}, Y_{auto_2_B}) für Aktuatoren (A1, A2) der Klimaanlage während des Automatikbetriebs repräsentieren sowie
- Einstellmittel (E1, E2) zur Vornahme des manuellen Einstellvorgangs und der Vorgabe von Stellgrößen (Y_{man_1}, Y_{man_2}) für die Aktuatoren (A1, A2) der Klimaanlage,
**gekennzeichnet durch**
- Mittel zur Erfassung eines manuellen Einstellvorgangs während des Klimaanlagenbetriebs,
- Mittel zur Auswahl einer zu korrigierenden Automatikkennlinie (2) für einen bestimmten Betriebszustand (A, B),
- Mittel zur Ermittlung der Stellgrößenabweichung (ΔY_{auto_1}, ΔY_{auto_2}) zwischen der aufgrund des manuellen Einstellvorgangs eingestellten Stellgröße (Y_{man_1}, Y_{man_2}) und der bei gleichem Betriebszustandswert (X) dem Automatikbetrieb zugeordneter Stellgröße (Y_{auto_1}, Y_{auto_2}),
- Mittel zur Ermittlung eines Anlernwertes (ΔY_{auto_1_Lern}, ΔY_{auto_2_Lern}) **durch** Bewertung der ermittelten Stellgrößenabweichung (ΔY_{auto_1}, ΔY_{auto_2}) mit einem Bewertungsfaktor (v) und
- Mittel zur Anpassung der Automatikkennlinie (2) in Abhängigkeit von dem ermittelten Anlernwert (ΔY_{auto_1_Lern}, ΔY_{auto_2_Lern}), wodurch jeder Anlernwert (ΔY_{auto_1_Lern}, ΔY_{auto_2_Lern}) mit Hilfe einer Wichtungsfunktion über einen Bereich mehrerer Stützstellen gewichtet wird und die zu korrigierende Automatikkennlinie (2) an jeder der Stützstellen in Abhängigkeit von dem gewichteten Anlernwert korrigiert wird.

9. Klimaanlage nach einem der vorstehenden Ansprüche, **gekennzeichnet durch** Mittel zur Aufteilung des Anlernwertes, wobei der Anlernwert (ΔY_{auto_1_Lern}, ΔY_{auto_2_Lern}) mittels eines Aufteilungsgesetzes, insbesondere in Form einer Kennlinie, auf mehrere Automatikkennlinien (2) aufteilbar ist.

10. Klimaanlage nach einem der vorstehenden Ansprüche, **gekennzeichnet durch** insbesondere als Zähler ausgebildete Mittel zur Realisierung eines automatisch und kontinuierlich erfolgenden Übergangs von dem aufgrund des manuellen Eingriffs vorliegenden manuellen Betrieb in den Automatikbetrieb.

11. Klimaanlage nach einem der vorstehenden Ansprüche, **dadurch gekennzeichnet, dass** die Mittel zur Auswahl einer zu korrigierenden Automatikkennlinie (2) derart ausgebildet sind, dass jede zu korrigierende Automatikkennlinie (2) aus einer Mehrzahl von Automatikkennlinien (2) auswählbar ist, wobei die Automatikkennlinien (2) in Abhängigkeit von den vorliegenden Betriebszustandswerten (X) unterschiedlich priorisiert sind und die Auswahl der Automatikkennlinie(n) (2) in der Reihenfolge der Priorisierung erfolgen kann.

12. Klimaanlage nach einem der vorstehenden Ansprüche, **dadurch gekennzeichnet, dass** die Mittel zur Ermittlung der Stellgrößenabweichung (ΔY_{auto_1}, ΔY_{auto_2}) derart ausgebildet sind, dass die Stellgrößenabweichung (ΔY_{auto_1}, ΔY_{auto_2}) über eine aus einer Vielzahl von Einzelwerten manuell eingestellter Stellgrößen (Y_{man_1}, Y_{man_2}) bei jeweils zumindest nahezu gleichen Betriebszustandswerten (X) und diesen zugeordneten Stellgrößen (Y_{auto_1}, Y_{auto_2}) für den Automatikbetrieb ermittelbar ist.

## Claims

1. A method for operating an air conditioning system that is operable both manually and automatically for a means of transportation, more especially a motor vehicle, wherein an automatic characteristic line (2) is corrected based on a manual adjustment procedure, and wherein the air conditioning system comprises:
- sensors for detecting operating state values (X) influencing the climate in the means of transportation and representing an operating state (A, B),
- actuators (A1, A2) in the form of air conditioning system components, such as a fan or an air shutter drive,
- memory means having a plurality of automatic characteristic lines (2) for different operating states (A, B) which represent the rigidly predetermined dependencies between the operating state values (X) detected and the manipulated variable components (Y_{auto_1}; Y_{auto_1_A}, Y_{auto_1_B}; Y_{auto_2}; Y_{auto_2_A}, Y_{auto_2_B}) for actuators (A1; A2) assigned thereto, of the air conditioning system during automatic operation and
- adjusting means (E1, E2) for performing the manual adjustment operation and the specification of manipulated variables (Y_{man_1}, Y_{man_2}) for the actuators (A1, A2) of the air conditioning system, comprising the following method steps:
a) detecting the presence of a manual adjustment operation,
b) determining the manipulated variable deviation (ΔY_{auto_1}, ΔY_{auto_2}) between the manipulated variable (Y_{man_1}, Y_{man_2}) set on the basis of the manual adjustment operation and the manipulated variable (Y_{auto_1}, Y_{auto_2}) assigned to automatic operation when the operating state value is the same,
c) determining a learning value (ΔY_{auto_1_learn}, ΔY_{auto_2_learn}) by evaluating the determined manipulated variable deviation (ΔY_{auto_1}, ΔY_{auto_2}) using a weighting factor (v),
d) adjusting the automatic characteristic line (2) as a function of the learning value (ΔY_{auto_1_learn}, ΔY_{auto_2_learn}) determined under c) by weighting each learning value (ΔY_{auto_1_learn}, ΔY_{auto_2_learn}) with the aid of a weighting function over a range of a plurality of interpolation points, and correcting the automatic characteristic line (2) to be corrected as a function of the weighted learning value at each of the interpolation points.

2. A method according to the above claim, **characterised in that** at least two automatic characteristic lines (2) of different operating states (A, B) are assigned to an actuator (A1; A2) and the pertaining learning value (ΔY_{auto_1_learn}, ΔY_{auto_2_learn}) is divided among a plurality of automatic characteristic lines (2) by means of an allotment law in the form of a characteristic line.

3. A method according to any one of the preceding claims, **characterised in that** the weighting function is a normal distribution function.

4. A method according to any one of the preceding claims, **characterised in that** the vertex of the weighting function is arranged in the current operating state value (X_{current}) of the automatic characteristic line (2) to be corrected.

5. A method according to any one of the preceding claims, **characterised in that** the manual operation prevailing because of the manual adjustment operation is automatically and continuously converted to automatic operation after the end of the adjustment operation.

6. A method according to any one of the preceding claims, **characterised in that** each automatic characteristic line (2) to be corrected is selected from a plurality of automatic characteristic lines (2) wherein these are prioritised differently as a function of the prevailing operating states (A, B) and each automatic characteristic line (2) is selected in the order of prioritisation.

7. A method according to any one of the preceding claims, **characterised in that** the deviation is determined via one of a plurality of individual values of manually adjusted manipulated variables (Y_{man_1}, Y_{man_2}) with, in each case, at least virtually identical operating state values (X) and manipulated variables (Y_{auto_1}, Y_{auto_2}) assigned to these values for automatic operation.

8. An air conditioning system for a means of transportation, more especially for a motor vehicle, having a manual operation and an automatic operation, wherein each automatic characteristic line (2) is correctable in automatic operation based on a manual adjustment process, comprising:
- sensors for detecting operating state values (X) influencing the climate in the means of transportation and representing an operating state (A, B),
- actuators (A1, A2) in the form of air conditioning system components, such as a fan or an air shutter drive,
- memory means having a plurality of automatic characteristic lines (2) for different operating states (A, B) which represent the rigidly predetermined dependencies between the operating state values (X) detected and the manipulated variables (Y_{auto_1}; Y_{auto_1_A}, Y_{auto_1_B}; Y_{auto_2}; Y_{auto_2_A}, Y_{auto_2_B}) assigned thereto for actuators (A1; A2), of the air conditioning system during automatic operation and
- adjusting means (E1, E2) for performing the manual adjustment operation and the specification of manipulated variables (Y_{man_1}, Y_{man_2}) for the actuators (A1, A2) of the air conditioning system, **characterised by**
- means for detecting a manual adjustment operation during operation of the air conditioning system,
- means for selecting an automatic characteristic line (2) to be corrected for a certain operating state (A, B),
- means for determining the automatic variable deviation (ΔY_{auto_1}, ΔY_{auto_2}) between the manipulated variable (Y_{man_1}, Y_{man_2}) adjusted on the basis of the manual adjustment operation and the manipulated variable (Y_{auto_1}, Y_{auto_2}) assigned to automatic operation at the same operating state value (X),
- means for determining a learning value (ΔY_{auto_1_learn}, ΔY_{auto_2_learn}) by evaluating the determined manipulated variable deviation (ΔY_{auto_1}, ΔY_{auto_2}) using a weighting factor (v), and
- means for adjusting the automatic characteristic line (2) as a function of the determined learning value (ΔY_{auto_1_learn}, ΔY_{auto_2_learn}) so each learning value (ΔY_{auto_1_learn}, ΔY_{auto_2_learn}) is weighted with the aid of a weighting function over a range of a plurality of interpolation points, and the automatic characteristic line (2) to be corrected is corrected at each of the interpolation points as a function of the weighted learning value.

9. An air conditioning system according to any one of the preceding claims, **characterised by** means for allocating the learning value, wherein the learning value (ΔY_{auto_1_learn}, ΔY_{auto_2_learn}) can be allocated by means of an allocation law, more especially in the form of a characteristic line, among a plurality of automatic characteristic lines (2).

10. An air conditioning system according to any one of the preceding claims, **characterised by** means configured, more especially, as a counter to implement an automatic and continuous transition from the manual operation prevailing due to the manual intervention to automatic operation.

11. An air conditioning system according to any one of the preceding claims, **characterised in that** the means for selecting an automatic characteristic line (2) to be corrected are configured such that each automatic characteristic line (2) to be corrected can be selected from a plurality of automatic characteristic lines (2), wherein the automatic characteristic lines (2) are differently prioritised as a function of the prevailing operating state values (X) and the automatic characteristic line(s) (2) can be selected in the order of prioritisation.

12. An air conditioning system according to any one of the preceding claims, **characterised in that** the means for determining the manipulated variable deviation (ΔY_{auto_1}, ΔY_{auto_2}) are configured such that the manipulated variable deviation (ΔY_{auto_1}, ΔY_{auto_2}) is determinable via one of a plurality of individual values of manually adjustable manipulated variables (Y_{man_1}, Y_{man_2}) with in each case at least approximately the same operating state values (X) and manipulated variables (Y_{auto_1}, Y_{auto_2}) assigned to these values for automatic operation.

## Revendications

1. Procédé d'utilisation d'une installation de climatisation à commande manuelle ou automatique pour un moyen de transport, notamment un véhicule automobile, une ligne caractéristique de commande automatique (2) étant corrigée sur la base d'une opération de réglage manuelle et l'installation de climatisation comprenant :
- des capteurs destinés à saisir des valeurs d'état de fonctionnement (X) représentant un état de fonctionnement (A, B) et influençant le climat dans le moyen de transport,
- des actionneurs (A1, A2) sous la forme de composants de l'installation de climatisation comme le ventilateur ou l'entraînement des volets d'aération,
- des moyens de mémoire avec un grand nombre de lignes caractéristiques de commande automatique (2) pour différents états de fonctionnement (A, B) qui représentent les dépendances fixes données entre les valeurs d'état de fonctionnement enregistrées (X) et les fractions de la grandeur de réglage associées (Y_{auto_1}; Y_{auto_1_A}; Y_{auto_1_B}; Y_{auto_2}; Y_{auto_2_A}; Y_{auto_2_B}) pour des actionneurs (A1;A2) de l'installation de climatisation en mode automatique, ainsi que
- des moyens de réglage (E1, E2) pour procéder à l'opération de réglage manuelle et à la définition de grandeurs de réglage (Y_{man_1}, Y_{man_2}) pour les actionneurs (A1, A2) de l'installation de climatisation,
avec les étapes de procédé suivantes :
(a) saisie de la présence d'une opération de réglage manuelle,
(b) détermination de l'écart de grandeur de réglage (ΔY_{auto_1}, ΔY_{auto_2}) entre la grandeur de réglage (Y_{man_1}, Y_{man_2}) réglée sur la base de l'opération de réglage manuelle et la grandeur de réglage (Y_{auto_1}, Y_{auto_2}) associée au mode automatique pour la même valeur d'état de fonctionnement (X),
(c) détermination d'une valeur d'adaptation (ΔY_{auto_1_ada,} ΔY_{auto_2_ada}) par l'évaluation de l'écart déterminé des grandeurs de réglage (ΔY_{auto_1}, ΔY_{auto_2}) avec un facteur d'évaluation (v),
(d) adaptation de la ligne caractéristique de commande automatique (2) en fonction de la valeur d'adaptation (ΔY_{auto_1_ada}, ΔY_{auto_2_ada}) déterminée au point c) en pondérant chaque valeur d'adaptation (ΔY_{auto_1_ada}, ΔY_{auto_2_ada}) à l'aide d'une fonction de pondération sur une plage de plusieurs points d'appui et en corrigeant la ligne caractéristique de commande automatique (2) à corriger, sur chacun des points d'appui, en fonction de la valeur d'adaptation pondérée.

2. Procédé selon la revendication précédente,
**caractérisé en ce qu'**
au moins deux lignes caractéristiques de commande automatique (2) de différents états de fonctionnement (A, B) sont associées à un actionneur (A1;A2), et la valeur d'adaptation correspondante (ΔY_{auto_1_ada}, ΔY_{auto_2_ada}) est répartie sur plusieurs lignes caractéristiques de commande automatique (2) à l'aide d'une loi de répartition, notamment sous la forme d'une ligne caractéristique.

3. Procédé selon l'une quelconque des revendications précédentes,
**caractérisé en ce que**
la fonction de pondération est une fonction de répartition normale.

4. Procédé selon l'une quelconque des revendications précédentes,
**caractérisé en ce que**
le point de rebroussement est associé à la fonction de pondération dans la valeur d'état de fonctionnement actuelle (X_{actuelle}) de la ligne caractéristique de commande automatique (2) à corriger.

5. Procédé selon l'une quelconque des revendications précédentes,
**caractérisé en ce que**
le mode manuel existant sur la base de l'opération de réglage manuelle passe automatiquement et en continu en mode automatique à la fin de l'opération de réglage.

6. Procédé selon l'une quelconque des revendications précédentes,
**caractérisé en ce que**
chaque ligne caractéristique de commande automatique (2) à corriger est choisie parmi une pluralité de lignes caractéristiques de commande automatique (2), ces dernières ayant différentes priorités en fonction des états de fonctionnement (A, B) existant et la sélection de chaque ligne caractéristique de commande automatique (2) a lieu dans l'ordre de priorité.

7. Procédé selon l'une quelconque des revendications précédentes,
**caractérisé en ce que**
l'écart est déterminé par celui entre une valeur de grandeur de réglage (Y_{man_1}, Y_{man_2}) réglée manuellement parmi un grand nombre de valeurs individuelles pour respectivement des valeurs d'état de fonctionnement (X) au moins à peu près identiques, et des grandeurs de réglage (Y_{auto_1}, Y_{auto_2}) associées pour le mode automatique.

8. Installation de climatisation pour un moyen de transport, notamment un véhicule automobile, avec un mode manuel et un mode automatique, chaque ligne caractéristique de commande automatique (2) pouvant être corrigée en mode automatique sur la base d'une opération de réglage manuelle comprenant :
- des capteurs pour saisir des valeurs d'état de fonctionnement (X) représentant un état de fonctionnement (A, B) et influençant le climat dans le moyen de transport,
- des actionneurs (A1, A2) sous la forme de composants de l'installation de climatisation comme le ventilateur ou l'entraînement des volets d'aération,
- des moyens de mémoire avec un grand nombre de lignes caractéristiques de commande automatique (2) pour différents états de fonctionnement (A, B) qui représentent les dépendances fixes données entre les valeurs d'état de fonctionnement enregistrées (X) et les grandeurs de réglage y étant associées (Y_{auto_1}; Y_{auto_1_A}; Y_{auto_1_B}; Y_{auto_2}; Y_{auto_2_A}; Y_{auto_2_B}) pour des actionneurs (A1;A2) de l'installation de climatisation en mode automatique, ainsi que
- des moyens de réglage (E1, E2) pour procéder à l'opération de réglage manuelle et à la définition de grandeurs de réglage (Y_{man_1}, Y_{man_2}) pour les actionneurs (A1, A2) de l'installation de climatisation,
**caractérisée par**
- des moyens de saisie d'une opération de réglage manuelle pendant le fonctionnement de l'installation de climatisation,
- des moyens de sélection d'une ligne caractéristique de commande automatique (2) à corriger pour un état de fonctionnement donné (A, B),
- des moyens de détermination de l'écart de grandeurs de réglage (ΔY_{auto_1}, ΔY_{auto_2}) entre la grandeur de réglage (Y_{man_1}, Y_{man_2}) réglée sur la base de l'opération de réglage manuelle et la grandeur de réglage (Y_{auto_1}, Y_{auto_2}) associée au mode automatique pour la même valeur d'état de fonctionnement (X),
- des moyens de détermination d'une valeur d'adaptation (ΔY_{auto_1_ada,} ΔY_{auto_2_ada}) par l'évaluation de l'écart déterminé des grandeurs de réglage (ΔY_{auto_1,} ΔY_{auto_2}) avec un facteur d'évaluation (v), et
- des moyens d'adaptation de la ligne caractéristique de commande automatique (2) en fonction de la valeur d'adaptation (ΔY_{auto_1_ada,} ΔY_{auto_2_ada}) déterminée, pondérant chaque valeur d'adaptation (ΔY_{auto_1_ada}, ΔY_{auto_2_ada}) à l'aide d'une fonction de pondération sur une plage de plusieurs points d'appui et corrigeant la ligne caractéristique de commande automatique (2) à corriger sur chacun des points d'appui en fonction de la valeur d'adaptation pondérée.

9. Installation de climatisation selon l'une quelconque des revendications précédentes,
**caractérisée par**
des moyens de répartition de la valeur d'adaptation, la valeur d'adaptation (ΔY_{auto_1_ada}, ΔY_{auto_2_ada}) pouvant être répartie sur plusieurs lignes caractéristiques de commande automatique (2) à l'aide d'une loi de répartition, notamment sous la forme d'une ligne caractéristique.

10. Installation de climatisation selon l'une quelconque des revendications précédentes,
**caractérisée par**
des moyens conçus notamment sous forme de compteur pour la réalisation d'un passage ayant lieu automatiquement et en continu du mode manuel existant sur la base de l'intervention manuelle au mode automatique.

11. Installation de climatisation selon l'une quelconque des revendications précédentes,
**caractérisée en ce que**
les moyens de sélection d'une ligne caractéristique de commande automatique (2) à corriger sont conçus pour sélectionner chaque ligne caractéristique de commande automatique (2) à corriger à partir d'une pluralité de lignes caractéristiques de commande automatique (2), les lignes caractéristiques de commande automatique (2) ayant différentes priorités en fonction des états de fonctionnement (X) existant, et la sélection de la(des) ligne(s) caractéristique(s) de commande automatique (2) a lieu dans l'ordre de priorité.

12. Installation de climatisation selon l'une quelconque des revendications précédentes,
**caractérisée en ce que**
les moyens pour déterminer l'écart de grandeurs de réglage (ΔY_{auto_1}, ΔY_{auto_2}) permettent de déterminer l'écart de grandeurs de réglage (ΔY_{auto_1}, ΔY_{auto_2}) entre une valeur de grandeurs de réglage (Y_{man_1}, Y_{man_2}) réglées manuellement parmi un grand nombre de valeurs individuelles pour respectivement des valeurs d'état de fonctionnement (X) au moins quasi-identiques, et les grandeurs de réglage (Y_{auto_1}, Y_{auto_2}) associées pour le mode automatique.
